# EUROPEAN PATENT APPLICATION

(11) **EP 0 626 425 A2**
(43) Date of publication of application: **30.11.1994**
(21) Application number: 94201043.0
(22) Date of filing: 15.04.1994
(51) Int. Cl.: C08L 67/02, C08L 69/00, C08G 63/64, C08G 63/84

(54) **Compatible thermoplastic compositions based on polyesters and polycarbonates**

(30) Priority: 24.05.1993 IT MI931069
(71) Applicant: ENICHEM S.p.A., I-20124 Milano (IT)
(72) Inventor: Nadali, Giampietro, I-30033 Noale (Venezia) (IT); Tartari, Vittorio, I-31100 Treviso (IT); Ignatov, Vladimir, I-30172 Mestre (Venezia) (IT); Berti, Corrado, I-48022 Lugo (Ravenna) (IT); Fiorini, Maurizio, I-40053 Bazzano (Bologna) (IT); Pilati, Francesco, I-40127 Bologna (IT)
(74) Representative: Fusina, Gerolamo

(57) **Abstract**

Polyester-based thermoplastic polymer compositions having improved impact strength and resistance to solvent action together with improved working stability comprise:
a) an aromatic polycarbonate,
b) an aromatic polyester,
c) a polycarbonate-polyester block copolymer characterised by increased stability of the distribution and average dimension of the blocks in the molten state;
said copolymer being obtained by mixing together in the molten state under controlled conditions a polycarbonate and a polyester, this latter obtained by a process catalysed by compounds of lanthanide group metals.

These compositions demonstrate high compatibility between components a) and b) by the effect of the block copolymer, and manifest unusual structural and morphological stability even after repeated working in the molten state.

## Description

This invention relates to compatible thermoplastic compositions based on polyesters and polycarbonates.

In particular, the invention relates to polyester and polycarbonate based thermoplastic polymer compositions having an improved combination of chemical, mechanical and rheological properties compared with each individual polymer component, and containing in addition a particular polymeric compatibilizer. Thermoplastic polymers have found widespread commercial use because a large number of articles can be produced therefrom by industrial techniques such as moulding, blow-moulding, extrusion and the like, all based on manipulating the polymer in its molten state. Many of these materials manifest excellent mechanical, chemical, thermal and rheological properties, such as rigidity, toughness, high deformation temperature, resistance to solvents and aggressive agents, fluidity in the molten state, high dielectric constant and the like.

Frequently, one or more excellent properties of a polymer are accompanied by insufficiency in other properties of technological importance, with consequent prejudice to the applicational potential of the material. In this respect a plastics material of high technological merit must combine a satisfactory spread of properties such as to enable it to be worked and used in different environments under different stress conditions.

To satisfy this requirement, considerable research has been conducted in recent times on the preparation of mixtures of two or more polymers which exhibit the advantages of the individual components while at the same time compensating for the disadvantages inherent in each of them (synergism). It is however known that for thermodynamic reasons the miscibility of two polymers of different structure is generally very poor, the mixtures obtained being two-phase. It has also been observed that the final properties of a polymer mixture depend to a determining extent on the mixture micromorphology.

Thermoplastic polyesters, particularly polyethyleneterephthalate (abbreviated PET) and polybutyleneterephthalate (abbreviated PBT), and aromatic polycarbonates, especially those based on bisphenol A, each exhibit certain excellent properties and have previously been used in attempts to obtain polymer mixtures of high technological quality.

In particular it has been found that polycarbonate resistance to atmospheric agents can be improved by the addition of small quantities of polyesters such as PET or PBT. It has also been noted that the addition of small quantities of aromatic polycarbonate to PET improves its impact strength.

Said mixtures do not generally manifest an optimum combination of properties. Even more complex is the behaviour of polycarbonate-polyester mixtures containing similar quantities of the two polymers. It is considered that one of the reasons for this advantageous behaviour derives from the chemical and physical incompatibility of polycarbonates and polyesters, which does not allow a high dispersion of one polymer in the other to be achieved. This occurs precisely in the case of mixtures of PET and polycarbonates based on bisphenol A, which in principle could be of considerable technological interest.

Numerous publications exist on the study of the compatibility of two different polymer materials and generally on their behaviour in mixture. For example an article published in "Journal of Polymer Science, Pol. Phys. Ed.", vol. 19, page 1269 (1981) demonstrates how the morphology and microstructure of a heterogeneous polymer mixture is considerably influenced by small quantities of a third component able to act as a compatibilizer for the polymers or, in thermodynamic terms, able to reduce the free energy at the interface. Said compounds are generally of polymer or oligomer nature and tend to concentrate at the interface between the two or more polymer phases.

Also in the case of thermoplastic compositions containing polyesters and polycarbonate, methods or products have been sought which are able to make the two polymers more compatible, in order to improve the characteristics of their mixtures.

European patent application published under No. 528462 describes toughened polycarbonate-polyester mixtures with good solvent and moisture resistance which contain an ethylene copolymer with chain-pendent epoxy groups. However in such mixtures there is no improvement in the mutual compatibility of the polyester and polycarbonate.

Several other documents have been published on polycarbonate-polyester (PET) mixtures containing as the third component an elastomeric compound or an olefinic copolymer, such as U.S.A. patents 4,522,979, 4,764,556, 4,897,448 and 4,629,760, PCT application 91/15545 and European patent application 180,648 to cite just a few, which claim the improvement of certain properties such as impact strength and chemical or solvent resistance of the mixtures. However, none of these documents proposes any method for overcoming the drawbacks deriving from the incompatibility of the two main mixture components.

A further drawback which arises in the case of polycarbonate and polyester based compositions is due to transesterification between ester and carbonate groups which generally takes place during the working of the compositions in the molten state, it being promoted by the metal or acid residues deriving from the catalyst used in the industrial polyester production process and occluded within it. This reaction leads to the progressive formation of ester-carbonate random copolymers with loss of the salient characteristics of each compound. The final result of this process is the obtaining of a semi-compatible or even homogeneous mixture, which does not posses the expected characteristics. Again, the transesterification process is difficult to control because it takes place extremely rapidly within the mixture of the two molten polymers. This latter drawback is not of simple solution in that it is not economical to separate the residual catalyst contained in the polyester.

Various publications are known on the study of transesterification reactions in polycarbonate-polyester mixtures in the molten state, such as the works of J.W. Barlow et al. published in "Journal of Applied Polymer Science" in volumes 22, page 2155 (1978) and 23, page 85 (1979) respectively. In these publications it is suggested inter alia to form polyester-polycarbonate block copolymers, the average block dimension depending on the residence time of the mixture in the molten state. However although the formation of such block copolymers has been observed experimentally, they are not easy to use in industrial applications because they are unstable and their average dimension varies rapidly and unpredictably during their working in the molten state.

There is therefore an evident need for further improvements in the field of thermoplastic compositions based on aromatic polyesters and polycarbonates.

It has now been found by the present applicant that said drawbacks are advantageously overcome by thermoplastic compositions based on aromatic polyesters and polycarbonates, containing a particular compatibilizer additive.

One aspect of the present invention is therefore a thermoplastic polymer composition based on aromatic polyesters and polycarbonates which has an improved combination of mechanical, chemical, thermal and electrical properties coupled with high stability during its working in the molten state, comprising:
a) an aromatic polycarbonate consisting essentially of repetitive units having the following formula (I): 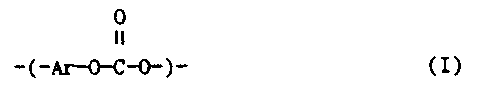 in which Ar is a C₆-C₃₀ divalent aromatic radical deriving from a compound with two phenolic hydroxyl groups,
b) an aromatic polyester,
c) a block copolymer comprising at least one polyester block and at least one polycarbonate block,
said block copolymer c) being prepared by reacting an aromatic polycarbonate with an aromatic polyester, this latter obtained by polycondensing a diol with a dicarboxylic acid or an ester thereof with a volatile alcohol using as catalyst a compound of a metal chosen from lanthanum or any other metal of the lanthanide group of the periodic table of elements.

Preferably the block copolymer c), which constitutes a further aspect of the present invention, comprises substantially blocks consisting of repetitive structural units of the following respective formulas: 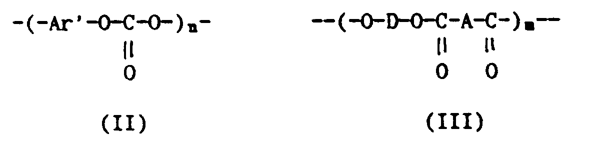
in which:
Ar' is a divalent aromatic radical deriving from a compound with two phenolic hydroxyl groups, and preferably having the same chemical structure as the radical Ar of the preceding formula (I), D and A respectively represent a divalent organic radical deriving from a diol and a divalent organic radical deriving from an aromatic dicarboxylic acid, and
n and m are independently two positive whole numbers between 5 and 250, and preferably between 5 and 100.

Particularly preferred values for n and m are between 10 and 50. A further aspect of the present invention is a process for preparing the polyester-polycarbonate block copolymer c),
comprising bringing into contact and mixing together in the molten state for a time of between 1 and 60 minutes a polycarbonate and a polyester, this latter obtained in the aforesaid manner by polycondensation catalyzed by lanthanides.

The aromatic polycarbonates a) usable for preparing the compositions of the present invention are polymeric esters of carbonic acid with a compound having at least two phenolic hydroxyl groups (also called an aromatic diol hereinafter). They can be prepared by reacting an aromatic diol with a carbonic acid precursor such as phosgene or a haloformate, which can also be a chloroformyl-terminating oligomer polycarbonate, or a dialkylcarbonate such as dimethylcarbonate or dibenzylcarbonate. Preferred aromatic diols for preparing polycarbonates usable in the present invention are those of general formula:

HO--Ar--OH (IV)

in which Ar has the general meaning previously defined for formula (I) and can for example be ortho-, para- or meta-phenylene, methylphenylene, chlorophenylene, dimethylphenylene, phenylenedimethylene, diphenylene, methanediphenylene, 2,2-propanediphenylene, diphenyleneether, diphenylenesulphone, naphthalene, anthracene and the like. Ar can also be a heteroaromatic divalent residue such as pyridine, thiophene, furan and the corresponding alkyl or halosubstituted nuclei.

Typical aromatic diols include: 2,2-bis(4-hydroxyphenyl)propane (bisphenol A); 2,2-bis(3,5-dimethyl-4-hydroxyphenyl)propane; 2,2-bis(4-hydroxyphenyl)pentane; bis(4-hydroxyphenyl)methane (bisphenol F); 2,4'-dihydroxydiphenylmethane; hydroquinone; resorcinol; 1,1-bis(4-hydroxyphenyl)ethane; 2,2-dihydroxydiphenyl; 2,6-dihydroxynaphthalene; 2,7-dihydroxynaphthalene; 1.1'-dihydroxy-4,4-dinaphthyl; 4,4'-dihydroxydiphenylsulphone; 2,4'-dihydroxydiphenylsulphone; 4,4'-dihydroxydiphenylether; 4,4'-dihydroxy-3,3'-dichlorodiphenylether; etc.

The polycarbonates of the present invention can also be copolymers containing units derived from two or more of said aromatic diols. In addition to the units deriving from said aromatic diols, the polycarbonates of the present invention can also contain lesser quantities of polyfunctional units, or branching agents derived from aromatic polyols or more generally from compounds characterised by at least three equal or different functional groups chosen from the groups -OH, -COOH, -SO₃H and -COCl.

Examples of usable branching agents are the compounds described in the following Italian patent applications: 2358 A/84, 21509 A/85, 23285 A/85, 23286 A/85, 21231 A/86, 21230 A/86, 21233 A/86, 20927 A/87, 20928 A/87, 20929 A/87.

The compositions of the present invention preferably contain a polycarbonate based on bisphenol A.

Aromatic polycarbonates suitable for the compositions of the present invention can be prepared by any one of the known processes, as described for example in US 4,018,750 relative to interfacial polymerization in suspension using phosgene as carbonic acid precursor, or in US 3,153,008 relative to a method for transesterification in the molten state. Polycarbonates prepared by one of said methods generally have an average molecular weight of between 10,000 and 50,000 and preferably between 15,000 and 30,000.

The aromatic polyester, usable as component b) in the compositions of the present invention, is any thermoplastic polyester deriving from the polycondensation of a diol or a precursor thereof with an aromatic dicarboxylic acid or a precursor thereof, which have an intrinsic viscosity, measured at 30°C in a 60/40 w/w phenol/tetrachloroethane mixture, of greater than or equal to 0.3 dl/g and preferably between 0.5 and 0.9 dl/g.

A long list of aromatic polyesters satisfying the aforesaid definition is given in the publication "Encyclopedia of polymer science and Engineering" by H.E. Mark et al., J. Wiley Ed., New York (1988), volume 12, pp 9-13.

Aromatic dicarboxylic acids usable for preparing aromatic polyesters suitable for the present invention are generally compounds of general formula:

HOOC-A-COOH (V)

in which A represents a C₆C₂₀ divalent aromatic residue and can for example be ortho-, para- or meta-phenylene, methylphenylene, chlorophenylene, dimethylphenylene, phenylenedimethylene, diphenylene, methanediphenylene, 2,2-propanediphenylene, diphenyleneether, diphenylenesulphone, naphthalene, anthracene and the like.

A can also be a heteroaromatic divalent residue such as pyridine, thiophene, furan and the corresponding alkyl or halosubstituted nuclei.

Dicarboxylic acids preferred for the purposes of the present invention are phthalic acids and naphthalenedicarboxylic acids. Terephthalic acid is particularly preferred.

The term "aromatic dicarboxylic acids" as used in the present invention also includes the various mixtures of two or more of the dicarboxylic acids included within the preceding formula, and mixtures of one or more of such dicarboxylic acids with up to 20 mol%, and preferably up to 10 mol%, of an aliphatic dicarboxylic acid such as succinic acid or adipic acid. The term "aromatic dicarboxylic acids" also includes mixtures of said compounds with up to 20 mol%, and preferably up to 10 mol%, of hydroxyaromatic derivatives such as meta and parahydroxybenzoic acids, hydroxynaphthoic acids and 2-hydroxyethylbenzoic acid.

For preparing aromatic polyesters suitable for the compositions of the present invention use can also be made of precursors of said dicarboxylic acids in which one or both the carboxyl groups are esterified with a volatile alcohol, or acylhalides, preferably chlorides, of the acids themselves. These latter are particularly useful for obtaining aromatic polyesters by polycondensation in solution or in suspension. Particularly useful for preparing the polyesters of the present invention are diesters obtained by esterifying carboxylic acids with alcohols which are volatile or in any event easily removable by evaporation
Typical aromatic dicarboxylic acid derivatives suitable for use in the present invention are C₁-C₅ aliphatic alcohol diesters such as dimethylesters, diethylesters and dibutylesters of the acids of the preceding formula.

Diols suitable for preparing the polyesters b) of the compositions of the present invention include all the usual aliphatic or arylaliphatic compounds with 2 hydroxyl groups per molecule generally used for preparing polyesters of the known art. These compounds are also usually known as glycols and enable linear polyesters to be obtained.

Diols suitable for preparing the polyesters b) include for example aliphatic glycols of general formula:

HO-(CH₂)ₜ-OH (VI)

in which t is a whole number between 1 and 10.

Typical diols include ethyleneglycol, diethyleneglycol, triethyleneglycol, tetramethyleneglycol, hexamethyleneglycol, decamethyleneglycol, neopentylglycol, 1,4-cyclohexanediol and 1,4-dimethylolcyclohexane. Ethyleneglycol is particularly preferred. The term "diols" as used in the present invention also includes mixtures of glycols with smaller quantities, generally up to 10 wt% on the glycol, of triols or polyols of higher functionality if branched thermoplastic polyesters are to be obtained.

The scope of the present invention includes both linear and branched thermoplastic polyesters obtained by the present process. Finally usable for the present invention, preferably in mixture with one or more of the previously mentioned diols, are those diols or polyols obtained by oligomerization or polymerization of glycols such as diethyleneglycol or propyleneglycol, or olefinic oxides such as ethylene oxide or propylene oxide. These diols or polyols are generally characterised by sequences of repetitive units with the following structure (VII):

--(O-CH₂-CHR-)ᵣ-- (VII)

in which R is hydrogen or methyl and r is a whole number between 2 and 500, and preferably between 2 and 300.

Polyesters b) suitable for the compositions of the present invention can be prepared by any of the known methods. An extensive description of the methods and catalysts generally used for preparing polyesters of the known art is given in the publication "Comprehensive Polymer Science", Ed. G.C. Eastmond et al., Pergamon Press, Oxford 1989, vol. 5, pp. 275-315, the contents of which are to be considered as an integral part of this patent application as reference. Aromatic polyesters are commonly prepared by a method conducted in two stages, in the first of which the diacid or the esterified derivative is reacted with an excess of the diol, the water or alcohol formed during the reaction being removed. In the second stage, which is conducted at a temperature exceeding 200°C, and generally between 230 and 290°C under vacuum, the excess diol is removed with formation of the polyester. The catalysts used both in the first and in the second stage are commonly of acid type and can perform their catalytic function either in a single stage or in both, according to their type. Catalysts particularly used for the industrial production of polyesters include for example sulphuric acid, lead, calcium, zinc or manganese acetates, titanium alkoxides, germanium and antimony oxides, these latter especially for the second polymerization stage.

The polyester-polycarbonate block copolymers c) of the present invention are obtained by transesterification, under controlled conditions, between a polycarbonate chosen from those previously described for component a) of the present compositions, and a particular polyester obtained by polycondensing a diol with a dicarboxylic acid or an ester thereof with a volatile alcohol, catalyzed by a compound of a metal chosen from lanthanum or any other of the metals of the lanthanide group in the periodic table of elements

In particular, said polycondensation process comprises:
i) reacting an aromatic dicarboxylic acid, or a derivative thereof esterified with a volatile alcohol, with an excess of a diol, while at the same time removing the water or volatile alcohol which forms during the reaction, until substantially the dicarboxylic acid diglycolester or a mixture of oligomers thereof is obtained;
ii) polycondensing the dicarboxylic acid diglycolester or the mixture of oligomers obtained in stage i) while at the same time removing the excess glycol released during the polycondensation, until the thermoplastic aromatic polyester is obtained;
wherein in stage i) or preferably in both stages i) and ii) of the process a salt or a saline complex, soluble in the reaction mixture, of a metal chosen from the group comprising lanthanum and the other elements of the lanthanide (or rare earth) group in the periodic table. Such elements have an atomic number of between 58 and 71.

More specifically, this metal is chosen from lanthanum, neodymium, praseodymium, samarium, europium, gadolinium, terbium, dysprosium, holmium, erbium, thulium, ytterbium and lutetium, and preferably from samarium, europium, gadolinium, terbium, dysprosium, holmium and erbium.

The salts or saline complexes of lanthanum, cerium, samarium and europium are particularly preferred for the purposes of the present invention.

Inorganic salts suitable for the present invention are compounds of general formula:

MXₚL_{q} (VIII)

in which M is a metal of the aforedefined lanthanide group and is preferably La, Ce, Sm or Eu, X is a monovalent inorganic counter-ion such as chlorine, bromine or fluorine, nitrate, nitrite, hydrogensulphate or the like, each of the q Ls is independently a neutral ligand and p is the oxidation state of the metal M, which can assume the value 2 or 3 with the condition that p+q is a maximum of 8 and preferably a whole number between 2 and 6. Other compounds usable as catalysts for the process of the present invention are organic salts of the following formula (IX):

MYₚL_{q} (IX)

in which each of the p Ys represents independently a monodentate organic anion and M, L, p and q have the same meaning as in formula (VIII), on condition that p+q is a maximum of 8 and preferably a whole number between 2 and 6.

Y can be an anion deriving from an aliphatic, cycloaliphatic or aromatic carboxylic acid, or an anion deriving from a sulphonic, sulphinic, phosphonic or phosphinic acid, or an alkoxide, aryloxide or carbamate anion.

Yₙ can also be an anion of a dicarboxylic acid such as isophthalic, oxalic or malonic acid, or if p = 3 can represent the combination of a dicarboxylate with a monofunctional anion. Typical examples of Y deriving from carboxylic or dicarboxylic acids included within the scope of the present invention include formate, acetate, chloroacetate, propionate, butyrate, hexanoate, decanoate, palmitate, stearate, cyclohexanoate, benzoate, chlorobenzoate, hydroxybenzoate, toluate, ethylbenzoate, octylbenzoate, 4-phenylbenzoate, naphthoate, 2-furancarboxylate, isophthalate, malonate, adipate and similar anions. Other examples of anions included within the meaning of Y are phenate, 2,6-dimethylphenate, methoxide, ethoxide, propoxide, isopropoxide, butoxide, ethylcarbamate, phenylcarbamate, benzenesulphonate, benzenephosphonate and the like.

Those preferred for the purposes of the present invention are benzoate, acetate, propionate, phenate, 2,6-dimethylphenate, propoxide, isopropoxide and butoxide ions.

The neutral L ligands of the preceding formulas (VIII) and (IX) are all those generally known to the expert in the metallorganic chemistry of the lanthanide group metals. In addition to H₂O and NH₃, which are the most common inorganic neutral ligands, the present invention includes those organic ligands consisting of non-ionic molecules containing at least one heteroatom such as N, P, O or S, with N preferred, which has at least one electronic doublet available for coordination. These ligands act as coordinators for the metal M by means of the basic Lewis centres situated on the heteroatoms. Substantially all the different classes of organic neutral ligands of the known art which can form stable complexes with one of the aforedefined metals M can be used for the purposes of the present invention. A large number of such ligands are reported in the publication "Gmelin Handbuch der Anorganischen Chemie, Coordination Compounds of Sc, Y, La to Lu", volumes D1-D4, 8th edition, Springer Verlag, Berlin (1980-1986), which forms an integral part of the present patent application as reference.

Preferred of said neutral ligands L are bi- or polydentate ligands characterised by two or more heteroatoms of the group N, P, O and S, situated in positions such as to coordinate with the same metal atom M, or, in the case of two heteroatoms, usually in position 1,4 or 1,5 one to the other. Typical examples of these ligands, which however do not represent any limitation to the present invention, are β-diketones or β-ketoesters such as acetylacetone or methyl acetylacetate, o-dipyridyl, 8-hydroxy-quinoline or crown ethers such as the compounds known as benzo-12-crown-4 and benzo-16-crown-5.

In the case of complexes in which at least one polydentate ligand is present, the symbol q in formulas (VIII) and (IX) represents the number of ligands and is less than the number of coordinating atoms.

Other compounds suitable for the purposes of the present invention are complexes of the aforedefined lanthanides M with one or more di- or polydentate ionic ligands.

Of these, those complexes of general formula (X):

BᵢMLⱼ (X)

are preferred in which M and L have the aforesaid meaning, B is a bidentate anionic ligand, and i is the oxidation state of the metal, with the condition that 2i + j is a whole number between 4 and 8 and preferably between 6 and 8.

The bidentate anionic ligands B of the present invention are those organic anions able to coordinate with the metal M in such a manner as to form cyclic structures generally having 5 to 7 atoms in the cycle, including the metal M.

Typical but non-limiting examples of bidentate anionic ligands usable for forming the complexes of general formula (X) are salicylates and acylsalicylates such as acetylsalicylate, β-diketonates such as acetylacetonate, orthoformylphenolates, 2-pyridylcarboxylates, aminoacetates, 3-aminopropionates, 2-aminophenolates etc.

Finally, the present invention comprises within its scope those catalysts consisting of di- and polynuclear compounds of the aforedefined lanthanides M, which pertain to the aforedescribed classes, even if not rigorously included within the preceding general formulas (VIII), (IX) and (X).

Of the preceding compounds, those particularly preferred are the compounds Eu(acetylacetonate)₃dipyridyl, Eu(2-formylphenolate)₃, Sm(acetylacetonate)₃dipyridyl, Sm(2-formylphenolate)₃, samarium triacetate hexahydrate.

Compounds of the preceding formulas (VIII), (IX) and (X) can be prepared, in the various cases, by one of the general methods forming part of the inorganic and metallorganic chemistry of the lanthanides, on which a vast quantity of literature exists. Most of these general methods, together with numerous specific examples, are described in the various volumes of the aforestated "Gmelin Handbuch der Anorganischen Chemie, Coordination Compounds of Sc, Y, La to Lu". Other preparation methods are reported for example in "Nouveau Traite de Chemie Mineral", volume VII, Masson & C. Publisher, France (1959).

In addition to the salts or saline complexes included in one of the preceding formulas (VIII), (IX) and (X), lanthanide oxides and/or mixed oxides can also be used as catalysts to obtain polyesters suitable for preparing the block copolymer c) of the present invention, especially when using dicarboxylic acids as such in stage i), in which said oxides are generally soluble under hot conditions.

The lanthanide-based catalysts for obtaining particular polyesters usable for the present invention are generally employed in a quantity of between 0.01 and 2 wt% on the dicarboxylic acid quantity. They are preferably added to the reaction mixture in a quantity of between 0.05 and 0.5wt%. In these concentrations they manifest high catalytic activity, comparable to and frequently greater than that of catalysts of the known art.

The diols and dicarboxylic acids or their corresponding derivatives esterified with a volatile alcohol and usable in said polycondensation process are generally all those usable in common processes for preparing thermoplastic aromatic polyesters of the known art, and in particular those processes mentioned for obtaining the aromatic polyesters b) of the present compositions. Generally stage i) of the aforedescribed process is conducted at a temperature of between 120 and 220°C under slow agitation, progressively distilling off the water or alcohol which forms during the reaction. Stage ii) is generally conducted at a temperature of between 190 and 290°C, preferably between 210 and 280°C, at a pressure of between 10 and 1000 Pascals.

Typically, the dimethyl ester of an aromatic dicarboxylic acid such as dimethylterephthalate or dimethylisophthalate or a mixture of the two is mixed with an excess of a diol such as ethyleneglycol (2/1 molar) or tetramethyleneglycol (1.5/1 molar). A suitable quantity, generally between 0.1 and 0.3 wt% on the dimethylester, of catalyst in the form of a soluble La, Ce, Sm or Eu complex is added to the monomer mixture. The mixture temperature is then raised to about 180-200°C, distilling off the methanol which forms during the course of the reaction between the diol and the carboxylic acid dimethylester.

When methanol is no longer evolved the temperature is further raised to 220-230°C and the pressure progressively reduced to about 30-50 Pascals. The excess glycol which develops during the transesterification reaction begins to distil off. The temperature is then gradually raised to a maximum value of about 280-290°C and the pressure further reduced to 10-20 Pascals. During the excess glycol distillation the reaction mixture increases in molecular weight and viscosity until the molten polyester is obtained when the excess glycol has been removed in the desired quantity.

These polyesters generally have a molecular weight of between 5000 and 100,000, and preferably between 15,000 and 50,000.

Specifically, PET obtained by said process catalyzed with lanthanide compounds has an intrinsic viscosity, measured in a 40/60 w/w phenol/tetrachloroethane solution, at least greater than 0.3 dl/g and generally between 0.5 and 1.2 dl/g. Preferred PET intrinsic viscosity values are between 0.6 and 0.9 dl/g.

Aromatic polyesters prepared with lanthanide-based catalysts are characterised by high molecular weight and high thermal stability. They also show little tendency to transesterify in the molten state with common polycarbonates. The applicant considers that this behaviour is to be attributed to the use of lanthanide derivatives as polymerization catalysts, although the mechanism by which this stabilization occurs is not fully understood.

When a polyester obtained by polycondensation catalyzed by lanthanides is brought into contact in the molten state with an aromatic polycarbonate, the transesterification reaction between the two polymers occurs only partially and in a controllable manner, hence enabling a properly characterised block polymer to be obtained in which the block dimension distribution is relatively stable with time in the molten state, both in the block copolymer as such and in mixture with homopolymer polyesters and/or polycarbonates.

According to the present invention, the block copolymers c) are preferably prepared by mixing together in the molten state, at a temperature between 200 and 300°C, a polycarbonate, and a polyester obtained as heretofore described with lanthanide-based catalysts.

The relative quantities of polycarbonate and polyester are not critical for the purposes of the present invention and can be chosen by the operator on the basis of the desired composition of the copolymer to be prepared.

The weight ratio of polycarbonate to polyester in the block copolymer is generally within the range of 10/90 to 90/10, and is chosen for each case on the basis of the desired copolymer characteristics and its final use. The ratio is preferably between 30/70 and 70/30.

In a preferred embodiment of the present invention, the block copolymer c) consists essentially of blocks of polycarbonate and polyester whose monomer units are the same as the two components a) and b) respectively.

The mixing in the molten state can be effected by any of the continuous or batch apparatus suitable for this purpose, such as single or double screw extruders, internal Banbury mixers, Brabender mixers, mixing rollers and the like. The mixing time is not particularly critical, although it participates in determining the average block dimension, together with the other process factors such as temperature and shear stress deriving from the mixing. It has been particularly observed by the applicant, especially in the case of copolymers of PET with polycarbonates based on bisphenol A, that the average block dimension of the copolymer decreases as the mixing time increases, but the rate at which this happens is surprisingly much lower than that observed when the polyester is obtained by conventional processes not involving lanthanide-based catalysts. It has also been observed that the average blockdimension tends, after an initial period of variation, to stabilize around a value much higher than the average dimension found in a random copolymer. This value clearly depends, in a given case, on the initial polyester/polycarbonate weight ratio, on the structure of these polymers, on the temperature and on the other process variables.

The mixing time required to obtain the block copolymer of the present invention is generally greater than one minute and preferably between one minute and 120 minutes, at a temperature of between 240 and 280°C, with particular preference for a time of between 3 and 30 minutes at that temperature.

Experimental evidence of the particular behaviour of the block copolymers of the present invention is obtained by rheometric measurements, by spectroscopic examination especially by ¹H NMR, and by chemically determining the length of the blocks.

For the purposes of the present invention, the polyester-polycarbonate blocks in the copolymer c) preferably have average dimensions which are not too dissimilar and preferably lie within the molecular weight range of 1000-10000
The polyester-polycarbonate block copolymer of the present invention is a polymeric material which can be used in mixture with the aromatic polycarbonates and polyesters defined heretofore as components a) and b) of the compositions according to the present invention, or can be used as such and converted by usual working methods such as moulding and forming to produce articles and components.

In their most general embodiment, the compositions of the present invention are defined by the simultaneous presence at least of component c), without particular limitations on weight ratios with the other components. In particular the invention also includes compositions in which the block copolymer c) is mixed only with one of the components a) or b), or with smaller quantities, preferably from 0 to 50 wt%, of a) and/or b).

In another preferred embodiment of the present invention, components a) and/or b) are in a prevalent quantity and are mixed in an a)/b) weight ratio of between 80/20 and 20/80, preferably between 60/40 and 40/60. In this case the block copolymer c) is added to the mixture in a quantity of between 2 and 50 wt%, and preferably between 5 and 25 wt%, with respect to the total weight of the mixture a)+b)+c).

The compositions of the present invention can be obtained by any one of the known methods suitable for the purpose.

They can be prepared by mixing the three components a), b) and c) in the molten state by any of the known methods for mixing molten polymers, such as by extrusion, Brabender mixers etc.

The present compositions can also be prepared in solution, but this method is less preferred.

Mixing generally takes place in the molten state for a time and temperature which are determined for any given case on the basis of the composition. The temperature is usually between 200 and 300°C. Any mixing apparatus can be used. The method can be continuous or batch. Specifically, single or double screw extruders, internal Banbury mixers, mixing rollers and the like can be used. The mixing time is preferably short and can vary from 1 minute to 10 minutes, and preferably from 1 minute to 5 minutes.

In one embodiment of the present invention the compositions based on polycarbonate and polyester also contain, in addition to the compatibilizer c), an inhibitor for the polycondensation catalyst present in the polyester b). This inhibitor is generally a compound able to form products which are chemically inert towards the polyester when they react with said catalyst. Some non-limiting examples of typical inhibitors which can be used in the present invention are organic phosphites and/or phosphates such as di-n-octadecylphosphite, triphenylphosphite, diphenyl-phosphite and triphenylphosphate, or arsenic derivatives such as As₂O₃. Particularly advantageous and surprising results were obtained by the present applicant where the polyester b) used for preparing the present compositions was obtained by a process catalyzed by compounds of metals of the lanthanide group, as heretofore described, in which case the use of an inhibitor of the aforesaid type can be omitted without encountering drawbacks.

For the purposes of the present invention the preferred compositions are those containing a linear or branched polycarbonate a) based on bisphenol A, and an aromatic polyester b) consisting substantially of PET or PBT, in which the a)/b) weight ratio is between 80/20 and 20/80, and preferably between 60/40 and 40/60. Compositions comprising polycarbonate based on bisphenol A and PET are particularly preferred. In this case, the block copolymer c) preferably consists of polycarbonate-PET blocks in which the weight ratio within the blocks is between 60/40 and 40/60 and the average molecular weight of the blocks for both polycarbonate and PET is between 1000 and 10000.

The thermoplastic compositions of the present invention must not be considered as limited only to components a), b) and c), but can additionally contain other components or additives able to give them particular properties for specific uses. Of these, polymeric tougheners are of particular importance. These are polymers having a glass transition temperature less than 0°C, and can be linear block elastomers or polyolefins, or grafted or crosslinked copolymers, or of the core-shell type known to the expert of the art.

These are commonly added to the compositions of the present invention by mixing in the molten state, preferably in an extruder, to form a phase dispersed in the main polymer matrix. Examples of such polymeric tougheners are polybutadiene, butadiene-styrene copolymers, butadiene-acrylonitrile, ethylene-propylene rubbers, polyisobutene, polypropylene, polyethylene, ethylene-propylene-nonconjugated diene terpolymers (EPDM), polybutylacrylate and the other elastomeric acrylic copolymers, ethylene-acrylic acid copolymers, etc. Other examples of tougheners suitable for the polyesters of the present invention are graft copolymers consisting of a linear matrix formed from one of the aforesaid polymers or copolymers on which blocks are grafted deriving from the polymerization of polar or polarizable unsaturated compounds such as acrylic or methacrylic esters of saturated aliphatic alcohols, vinyl acetate, acrylonitrile, styrene and substituted styrenes.

Said polymer additives can be added to the polyesters polycarbonates compositions of the present invention in a quantity up to 30 wt% with respect to the weight of the components a), b),c) and preferably between 10 and 25 wt%. Although the composition components can be added at the beginning directly to the mixing unit, in some cases it is convenient to totally or partly premix one of the components a), b) or c) with the possible further polymer additive.

In addition to the aforesaid components, the thermoplastic compositions of the present invention can also contain other additives such as nucleants, stabilizers, antiflame agents, fluidifiers, antioxidants, pigments, mineral fillers and fibrous reinforcements. The compositions or block polymers of the present invention can contain one or more of the additives commonly used with industrial polyesters, and also those additives used for polycarbonates or toughening rubbers if these are present in mixture with the other components. These additives are generally known to the expert operating in the conversion of polyesters and/or polycarbonates and their compositions to finished products, to give these the particular properties required for their optimum use.

For example, nucleants suitable for PET and usable in the present compositions sodium salts of carboxylic acids. Examples of stabilizers suitable for use in the compositions of the present invention include liquid phosphates and hindered phenols, which can be added to the compositions of the present invention in a quantity of between 0.05 and 5.0 wt% on the total composition. Mineral fillers for increasing the rigidity of the thermoplastic compositions are usually inert salts such as mica, kaolin, calcium sulphate, titanium oxide, talc, glass beads, aluminium sulphate, whiskers and the like.

Fibrous reinforcements usable in the present compositions include glass fibres, rock wool, carbon fibres, organic and inorganic high modulus fibres, metal fibres etc. The particularly preferred fibrous reinforcement is glass fibre, which can either be untreated or, preferably, treated with silanes or titanates as is well known to the expert and to the producer of such fibre.

The reinforcement additives can be used in a quantity generally not exceeding 50 wt%, and preferably not more than 30 wt%, on the total composition.

All said additives and further components suitable for the compositions of the present invention can be used in the same proportions and with equally satisfactory results in mixture with the polyester-polycarbonate block copolymers as such, these constituting a further aspect of the invention.

The compositions of the present invention, including the polyester-polycarbonate block copolymers, as such or in mixture with additives, can be easily worked by injection or extrusion and are suitable for the various conversion methods such as injection moulding, thermoforming etc. They demonstrate a combination of properties which make them suitable for use in producing formed articles with high impact strength and high modulus, together with good resistance to heat.

Particularly advantageous for the use of the compositions or copolymers of the present invention in the common conversion processes is the fact that these materials maintain their composition and distribution sufficiently long to enable them to undergo various passes in the molten state without large variation in their properties. In contrast, similar compositions and copolymers of the known art but not containing the particular block copolymer of the present invention do not demonstrate sufficient stability, are more difficult to prepare because they are less controllable, and require the addition of an inhibitor. Because of these properties the compositions of the present invention can be used in the motor transport industry, for the production of components which can be furnace-painted, parts which come into contact with the engine, household electrical appliances, electronic articles and technical articles in general in the form of sumps, boxes, containers, panels, plates, sheets, rods and other formed articles of more complex geometry.

For a better understanding of the present invention and to enable it to be implemented in practice, some illustrative examples are given hereinafter, which are however to be in no way considered as limitative thereof.

### Characterisation of polyester-polycarbonate copolymers

The polyester-polycarbonate copolymers obtained in accordance with some of the ensuing examples were characterised, in particular to determine their block strength and dimension, by combining a method involving selective degradation of the polycarbonate with spectroscopic characterisation by ¹H NMR. Using this procedure the block copolymer is firstly examined by ¹H NMR to determine the relative quantity of diarylester groups (-Ar-COO-A-, in which Ar and A have the aforesaid meaning), which give a characteristic signal at 8.2-8.4 ppm. The intensity of this signal is proportional to the quantity of random copolymer formed.

The block copolymer is then subjected to selective degradation by adding 1 ml of piperidine to about 1 g (exactly weighed) of product to be degraded (finely ground and suspended in 25 ml of dichloromethane), and then left to react for one hour under agitation at ambient temperature. The complete demolition of the polycarbonate segments can be easily monitored by IR spectroscopy on an aliquot of the solution, until complete disappearance of the carbonate band at 1774 cm⁻¹. When demolition of the polycarbonate segments is complete, the reaction mixture is poured into 75 ml of methanol, to also completely recover the shortest PET segments which might be soluble in the dichloromethane/piperidine mixture. It is filtered through a septum and dried in an oven under vacuum. The residue obtained is weighed to calculate the relative percentage of PET blocks. The average molecular weight of the residue is then measured by usual methods to determine the average dimension of the blocks originally present in the copolymer. Selective solubility tests (selective extraction) are then used to establish the nature of a polymer sample resulting from mixing polyethyleneterephthalate and polycarbonate in the molten state, to determine whether it consists of a PET-polycarbonate block copolymer or a physical mixture of the two polymers (absence of transesterification). In this method about 1 g (exactly weighed) of finely ground product to be fractionated is dissolved in 25 ml of dichloromethane and 1 ml of trifluoroacetic acid. After complete dissolving, 75 ml of tetrahydrofuran are added to precipitate an insoluble fraction. The filtrate is evaporated under vacuum to obtain the soluble fraction as residue. In the case of PET-polycarbonate copolymers two fractions are obtained both consisting of polymers containing polyester units and polycarbonate units (recognizable under infrared). Tests effected on physical mixtures of PET and polycarbonate homopolymers show that under these conditions separation between the two polymers is quantitative.

In all the ensuing examples the PET intrinsic viscosity values represent a measurement made within the range of 0.3-1 g/100 ml at 25°C in a 60/40 w/w tetrachloroethane/phenol mixture. The ¹H NMR spectra cited hereinafter were recorded on dilute solutions of the copolymer to be examined, dissolved in an 80/20 mixture of deuterated chloroform and deuterated trifluoroacetic acid.

### Preparation of samarium or europium complexes

### A) Preparation of samarium tris(o-formyl-phenolate)

About 500 ml of an aqueous solution containing 8.5 g of o-formylphenol (0.07 moles) are added to a solution of 3 g of samarium trichloride (11.7 mmoles) in 500 ml of water. The mixture pH is adjusted to between 6 and 7 by adding concentrated aqueous KOH and the system is maintained under agitation for 8 hours. The precipitate which forms is filtered off, washed with water and dried at 60°C under vacuum. The product obtained in this manner consists of samarium tris(o-formylphenolate) in a practically quantitative yield on the samarium.

### B) Preparation of europium tris(o-formyl-phenolate)

The complex europium tris(o-formyl-phenolate) is prepared in the same manner as the aforedescribed corresponding samarium complex A), but using europium trichloride instead of samarium trichloride without altering the other reagents, which are used in the same molar proportions.

### C) Preparation of europium acetylacetonate dipyridyl

About 300 ml of an aqueous solution containing 7 g of acetylacetone (0.07 mmoles) are added to a solution of 3 g of europium trichloride (11.6 mmoles) in 500 ml of water. The mixture pH is adjusted to between 6 and 7 by adding concentrated aqueous KOH, and the system is maintained under agitation for 8 hours. The precipitate thus formed is filtered off, washed with water and dried at 60°C under vacuum for 14 hours. The solid, consisting of europium acetylacetonate, is then dissolved in ethanol and a solution containing 3.7 g of 2,2'-dipyridyl in ethanol added thereto. The mixture is maintained under agitation for about one hour. The precipitate formed is filtered off, washed with ethanol and dried in an oven, it consisting of Eu(AcAc)₃(2,2'-dipy) in a practically quantitative yield on the initial europium.

### EXAMPLE 1 Preparation of PET using a catalyst based on samarium tris(o-formylphenolate)

305 g of dimethylterephthalate (DMT, 1.572 moles) and 221 g of ethyleneglycol (3.565 moles) in the presence of 0.506 g of samarium tris(o-formylphenolate) (9.9x10⁻⁴ moles) prepared by the aforedescribed procedure A) are loaded into a 1.8 litre cylindrical flask equipped with a bladed stirrer and a motor able to measure the viscosity of the molten mass. The system is heated to 195°C at atmospheric pressure and maintained at this temperature for 60 minutes, continuously distilling off the methanol produced.

The pressure is then reduced to 30 Pascals for 20 minutes and the reaction temperature is increased to 268-270°C and maintained under these conditions for 2.5 hours. The polyester obtained is discharged from the reactor, cooled rapidly in water and dried in an oven at 100°C for 10 hours at 30 pascals.

The intrinsic viscosity of the PET obtained in this manner is 0.80 dl/g.

### EXAMPLE 2 Preparation of PET using a catalyst based on europium (acetylacetonate)₃dipyridyl

A PET sample is prepared following the same procedure and using the same reagents in the same proportions as Example 1, but using 0.601 g of europium (acetylacetonate)₃dipyridyl obtained by the aforedescribed procedure C) as catalyst instead of the samarium complex. The PET obtained in this manner has an intrinsic viscosity of 0.67 dl/g.

### EXAMPLE 3 Preparation of PET using a catalyst based on europium tris(o-formylphenolate)

A PET sample is prepared following the same procedure and using the same reagents in the same proportions as Example 1, but using 0.601 g of europium tris(o-formylphenolate) obtained by the aforedescribed procedure B) as catalyst instead of the samarium complex. The PET obtained in this manner has an intrinsic viscosity of 0.74 dl/g.

### EXAMPLES 4-8 Preparation of polyester-polycarbonate block copolymers

### EXAMPLE 4

22.7 g of PET prepared in accordance with Example 2 were placed in a Brabender 50W mixer (chamber volume 50 ml), and 30 g of a bisphenol A linear polycarbonate not containing stabilizing additives and having an intrinsic viscosity of 0.65 dl/g in chloroform at 30°C, corresponding to a molecular weight of about 33000 were added thereto. The two polymers, previously dried under vacuum at 110°C overnight, were mixed with the chamber closed for 90 minutes at 270°C at a blade rotational speed of 60 rpm, and then for a further 90 minutes under the same conditions but with vacuum applied (100 Pascals).

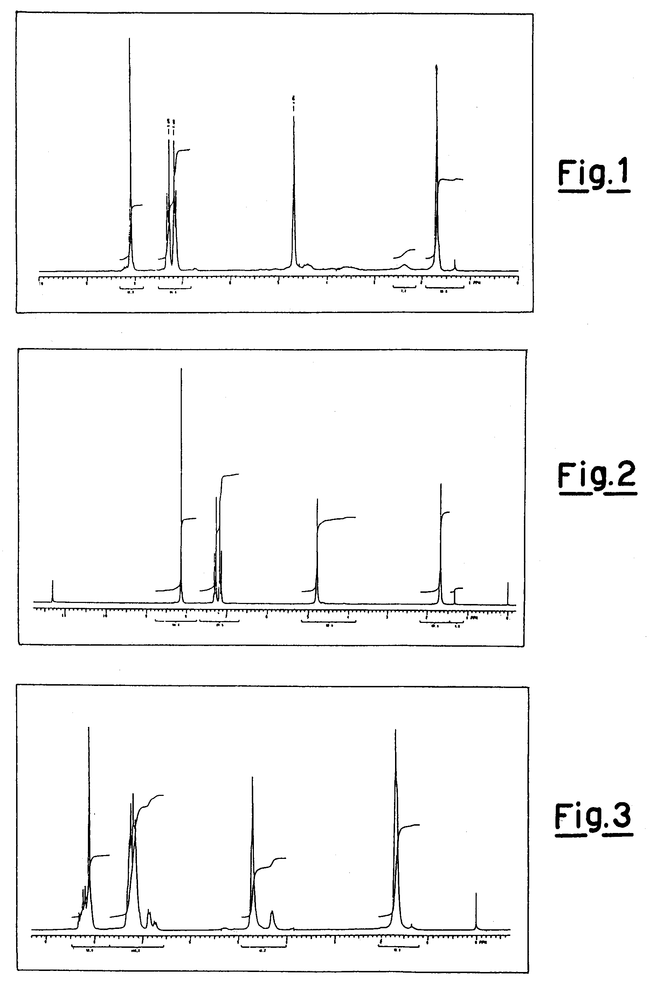

The resultant product has the ¹H NMR spectrum shown in Figure 1. It was characterised by selective extraction and selective degradation of the polycarbonate sequences. The ¹ H NMR spectrum for the fraction soluble in dichloromethane showed signals both of PET and polycarbonate, and the same was found for the fraction insoluble in dichloromethane. The ¹H NMR spectrum for the residue after selective degradation (the weight of which corresponded to the PET quantity expected on the basis of the composition of the initial mixture of the two polymers) shows that it contains only PET. This residue had an intrinsic viscosity of 0.24 dl/g, corresponding to an average molecular weight of 3100 for the PET blocks in the copolymer.

### EXAMPLE 5

Example 4 was repeated using the same procedure and the same mixture component proportions, but using 22.7 g of PET prepared in accordance with Example 3 instead of Example 2. After extractive selection as heretofore described, the product obtained showed the presence of PET and polycarbonate both in the dichloromethane-soluble and in the dichloromethane-insoluble fractions. Likewise, after selective degradation, the ¹H NMR spectrum for the product showed the presence only of PET with an intrinsic viscosity of 0.13 dl/g, corresponding to an average molecular weight of 1200 for the PET blocks in the copolymer.

### EXAMPLE 6

Example 4 was repeated with the same procedure and the same mixture component proportions, but using 22.7 g of PET prepared in accordance with Example 1 instead of Example 2. After extractive selection as heretofore described, the product obtained showed the presence of PET and polycarbonate both in the dichloromethane-soluble and in the dichloromethane-insoluble fractions. Likewise, after selective degradation, the ¹H NMR spectrum for the product showed the presence only of PET with an intrinsic viscosity of 0.11 dl/g, corresponding to an average molecular weight of 900 for the PET blocks in the copolymer.

### EXAMPLE 7

20 g of PET prepared in accordance with Example 2 were placed in a Brabender 50W mixer and 20 g of the bisphenol A linear polycarbonate used in Example 4 were added. The two polymers, previously dried overnight at 110°C under vacuum, were mixed for 5 minutes at 270°C with a blade rotational speed of 30 rpm, passing a stream of nitrogen dried over molecular sieves for the entire duration of the test.

The ¹H NMR spectrum for the final product shows no evidence of exchange reactions. However, characterisation of the chemical structure in the aforedescribed manner showed the presence of both PET and polycarbonate both in the dichloromethane-soluble and in the dichloromethane-insoluble fractions. After selective degradation, the ¹H NMR spectrum for the residue (the weight of which corresponded to the PET quantity expected on the basis of the composition of the initial mixture of the two polymers) shows that it contains only PET. This residue had an intrinsic viscosity of 0.76 dl/g, corresponding to an average molecular weight of 18700 for the PET blocks in the copolymer.

### EXAMPLE 8

Example 7 was repeated using the same procedure and the same mixture component proportions, but continuing the mixing in the Brabender 50W mixer for 17 minutes instead of 3 minutes. Again in this case the ¹H NMR spectrum for the final product, shown in Figure 2, shows no evidence of exchange reactions. However, characterisation of the chemical structure in the aforedescribed manner showed the presence of both PET and polycarbonate both in the soluble and in the insoluble fractions. After selective degradation, the ¹H NMR spectrum for the residue (the weight of which corresponded to the PET quantity expected on the basis of the composition of the initial mixture of the two polymers) shows that it contains only PET. This residue had an intrinsic viscosity of 0.48 dl/g, corresponding to an average molecular weight of 9100 for the PET blocks in the copolymer.

### EXAMPLE 9 (comparison)

22.7 g of PET prepared from Ca(CH₃COO)₂ and Sb₂O₃ in accordance with the known polycondensation art and having an intrinsic viscosity of about 0.93 dl/g, were placed in the Brabender 50W mixer of the preceding examples, and 30 g of the bisphenol A linear polycarbonate used in the preceding examples were added. The two polymers, previously dried overnight at 110°C under vacuum, were mixed for 30 minutes at 270°C, with a blade rotational speed of 30 rpm.

The ¹H NMR spectrum for the final product, shown in Figure 3, shows signals at 8.2-8.4 characteristic of diarylester groups formed by exchange reactions between ester groups and carbonate groups. Characterisation by selective degradation showed no appreciable presence of PET blocks.

### EXAMPLE 10 (comparison)

22.7 g of PET prepared from TiOBu₄ in accordance with the known polycondensation art and having an intrinsic viscosity of 0.85 dl/g, were mixed with a polycarbonate as described in Example 9. Again in this case, characterisation of the resultant product, by ¹H NMR spectroscopy and selective degradation, showed the presence of a random PET-polycarbonate copolymer.

### EXAMPLE 11 (comparison)

20 g of the same PET and 20 g of the same polycarbonate used in Example 9, together with 0.2 g (equivalent to 0.5 wt%) of di-n-octadecylphosphite (acting as deactivator for the PET catalyst residues) were placed in the 50W Brabender mixer of the preceding examples after being dried under vacuum at 110°C. The mixture was agitated for 60 minutes at 270°C with a blade rotational speed of 30 rpm.

The ¹H NMR spectrum for the final product shows no evidence of exchange reactions between ester groups and carbonate groups. The product obtained was subjected to selective solubility tests, giving 50% of an insoluble fraction consisting only of PET with an intrinsic viscosity of 0.51 dl/g, and 50% of a soluble fraction consisting of only polycarbonate.

These results confirm that no exchange reaction took place, the final product therefore consisting of a physical mixture of the two homopolymers.

### EXAMPLE 12 Polyester-polycarbonate compositions

Four different compositions were prepared by mixing equal quantities of the PET used in Example 9, having an intrinsic viscosity of 0.93 dl/g, with a bisphenol A linear polycarbonate having an intrinsic viscosity of 0.65 dl/g (measured in chloroform at 30°C) in a Plasticord 2000 Brabender mixer used at 60 rpm at a temperature of 270°C. A different quantity of the polyester-polycarbonate block copolymer obtained as described in Example 4 was added to each composition, as follows:

| COMPOSITION NO. | BLOCK COPOLYMER (wt%) |
|---|---|
| i (comp.) | 0 |
| ii | 5 |
| iii | 10 |
| iv | 20 |

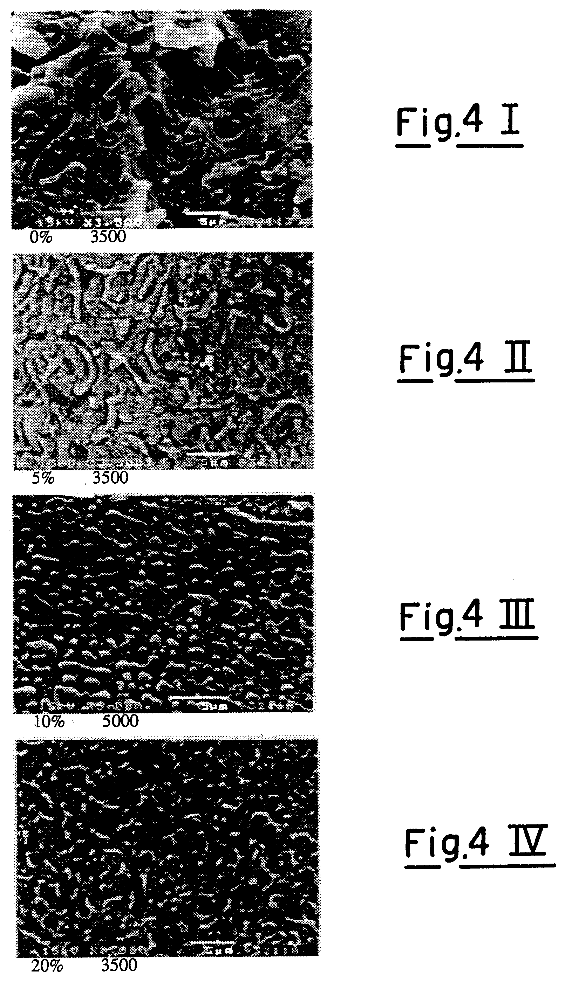

The percentages relate to the total weight of each composition. The morphology obtained in each composition was examined by an electronic scanning microscope and is shown in the photographs reproduced in Figures 4(i-iv).

As can be deduced from said figures, the block copolymer has a drastic influence on the final composition morphology, which assumes different aspects depending on the copolymer concentration. Figure 4( i), in which the compatibilizer is absent, shows high incompatibility between PET and polycarbonate. In the other three figures a morphology is observed in which one phase is finely dispersed within the other, the dimension of the discontinuous phase domains depending on the quantity of block copolymer added to the composition.

## Claims

1. A thermoplastic polymer composition based on aromatic polyesters and polycarbonates which has an improved combination of mechanical, chemical, thermal and electrical properties coupled with high stability during its working in the molten state, comprising:
a) an aromatic polycarbonate consisting essentially of repetitive units having the following formula (I): 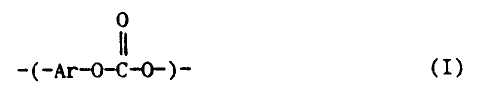 in which Ar is a C₆-C₃₀ divalent aromatic radical deriving from a compound with two phenolic hydroxyl groups,
b) an aromatic polyester,
c) a block copolymer comprising at least one polyester block and at least one polycarbonate block,
said block copolymer c) being prepared by mixing together in the molten state an aromatic polycarbonate and an aromatic polyester, this latter obtained by polycondensing a mixture comprising a diol and a dicarboxylic acid or a volatile alcohol ester thereof in the presence of a catalyst consisting of a compound of a metal chosen from lanthanum or any other metal of the lanthanide group of the periodic table of elements.

2. A polymer composition as claimed in claim 1, wherein the block copolymer c) consists essentially of repetitive carbonate and ester structural units of the following respective formulas: 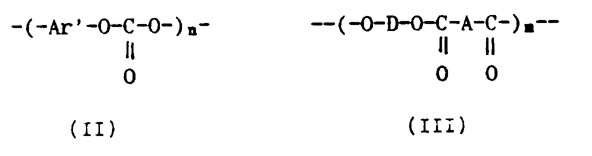 in which:
Ar' is a divalent aromatic radical deriving from a compound with two phenolic hydroxyl groups, and preferably having the same chemical structure as the radical Ar of the preceding formula (I), D and A respectively represent a divalent organic radical deriving from a diol and a divalent organic radical deriving from an aromatic dicarboxylic acid, and
n and m are independently two positive whole numbers between 5 and 250, and preferably between 5 and 100.

3. A thermoplastic composition as claimed in claim 2, wherein n and m are between 10 and 50.

4. A thermoplastic composition as claimed in claim 1, wherein the block copolymer c) consists essentially of polycarbonate blocks and polyester blocks having independently an average molecular weight of between 1000 and 10,000.

5. A thermoplastic composition as claimed in any one of the preceding claims, wherein the block copolymer c) consists essentially of polycarbonate and polyester blocks the monomer units of which have respectively the same structure as the monomer units of the polycarbonate a) and of the polyester b).

6. A thermoplastic composition as claimed in any one of the preceding claims, wherein the aromatic polyester used for preparing the block copolymer c) is obtained by polycondensation in the presence of a catalyst consisting of a salt or saline complex of a metal chosen from the lanthanide group, consisting of lanthanum, neodymium, praseodymium, samarium, europium, gadolinium, terbium, dysprosium, holmium, erbium, thulium, ytterbium and lutetium, and preferably from samarium, europium, gadolinium, terbium, dysprosium, holmium and erbium, and preferably chosen from lanthanum, cerium, samarium and europium.

7. A thermoplastic composition as claimed in claim 6, wherein the salt or saline complex of the lanthanide group metal has one of the following formulas (VIII), (IX) or (X):
MXₚL_{q} (VIII) MYₚL_{q} (IX) BᵢMLⱼ (X)
in which:
M is a metal of the lanthanide group and is preferably lanthanum, cerium, samarium or europium,
X is a monovalent inorganic counter-ion,
each L is independently a neutral ligand,
each Y represents independently a monodentate organic anion, B is a bidentate anionic ligand,
p and i are the oxidation states of the metal M, and can assume the value 2 or 3 with the condition that p+q is a maximum of 8 and preferably a whole number between 2 and 6, and that 2i + j is a whole number between 4 and 8 and preferably between 6 and 8.

8. A thermoplastic composition as claimed in claim 6, wherein the salt or saline complex of the lanthanide group metal is chosen from the compounds Eu(acetylacetonate)₃dipyridyl, Eu(2-formylphenolate)₃, Sm(acetylacetonate)₃dipyridyl, Sm(2-formylphenolate)₃ and samarium triacetate hexahydrate.

9. A thermoplastic composition as claimed in any one of claims 6 to 8, wherein the salt or saline complex of the lanthanide group metal is present in the polycondensation mixture in a concentration of between 0.01 and 2 wt%, and preferably between 0.05 and 0.5 wt%, on the weight of the dicarboxylic acid or its derivative with a volatile alcohol.

10. A thermoplastic composition as claimed in any one of the preceding claims, containing up to 50 parts by weight of components a) and/or b), and between 50 and 100 parts by weight of component c), the sum of the weights of a), b) and c) being equal to 100.

11. A thermoplastic composition as claimed in any one of claims 1 to 10, containing from 3 to 50 parts by weight of component c), and from 50 to 97 parts by weight of components a) and/or b), the sum of the weights of a), b) and c) being equal to 100.

12. A thermoplastic composition as claimed in claim 10 or 11, wherein the weight ratio of component a) to component b) is within the range of 80/20 to 20/80, and is preferably within the range of 60/40 to 40/60.

13. A thermoplastic composition as claimed in any one of the preceding claims, wherein the polycarbonate a) has an average molecular weight of between 10,000 and 50,000 and preferably between 15,000 and 30,000.

14. A thermoplastic composition as claimed in any one of the preceding claims, wherein the polycarbonate a) is chosen from those polycarbonates deriving from the reaction between a carbonic acid precursor and an aromatic diol chosen from 2,2-bis(4-hydroxyphenyl)propane (bisphenol A); 2,2-bis(3,5-dimethyl-4-hydroxyphenyl)propane; 2,2-bis(4-hydroxyphenyl)pentane; bis(4-hydroxyphenyl)methane; 2,4'-dihydroxydiphenylmethane; hydroquinone; resorcinol; 1,1-bis(4-hydroxyphenyl)ethane; 2,2-dihydroxydiphenyl; 2,6-dihydroxy-naphthalene; 2,7-dihydroxy-naphthalene; 1.1'-dihydroxy-4,4-dinaphthyl; 4,4'-dihydroxydiphenylsulphone; 2,4'-dihydroxy-diphenylsulphone; 4,4'-dihydroxy-diphenylether; 4,4'-dihydroxy-3,3'-dichlorodiphenylether or a mixture of two or more thereof.

15. A thermoplastic composition as claimed in claim 8, wherein the polycarbonate a) is poly[2,2-bis-(4-hydroxyphenyl)propane] carbonate.

16. A thermoplastic composition as claimed in any one of the preceding claims, wherein the aromatic polyester b) is a thermoplastic polyester deriving from the polycondensation of a diol or a precursor thereof with a C₈-C₂₂ aromatic dicarboxylic acid or a precursor thereof, which have an intrinsic viscosity, measured at 30°C in a 60/40 w/w phenol/tetrachloroethane mixture, of greater than or equal to 0.3 dl/g and preferably between 0.5 and 0.9 dl/g.

17. A thermoplastic composition as claimed in claim 16, wherein the aromatic polyester b) is derived from the polycondensation of a dicarboxylic acid chosen from phthalic acids, naphthalenedicarboxylic acids and diphenylenic acids, with an aliphatic diol chosen from glycols of general formula:
HO-(CH₂)ₜ-OH (VI)
in which t is a whole number between one and 10.

18. A thermoplastic composition as claimed in claim 17, wherein the aliphatic diol is chosen from ethyleneglycol, diethyleneglycol, triethyleneglycol, tetramethyleneglycol, hexamethyleneglycol, decamethyleneglycol, neopentylglycol, 1,4-cyclohexanediol, 1,4-dimethylolcyclohexane or a mixture of two or more thereof.

19. A thermoplastic composition as claimed in claim 16, wherein the aromatic polyester b) is polyethyleneterephthalate or polybutyleneterephthalate of average molecular weight between 15,000 and 50,000.

20. A thermoplastic composition as claimed in claim 1, comprising:
a) a linear polycarbonate based on bisphenol A,
b) a polyethyleneterephthalate in a quantity such that the ratio a)/b) is between 60/40 and 40/60,
c) 3-25 wt%, with respect to the weight of a)+b)+c), of a block copolymer consisting essentially of blocks of polycarbonate and polyethyleneterephthalate in which the weight ratio of the blocks is between 60/40 and 40/60 and the average molecular weights of the blocks are between 1000 and 10000.

21. A thermoplastic composition as claimed in any one of the preceding claims, comprising, in addition to components a), b) and c), up to 30 wt%, with respect to the weight of a)+b)+c), of a polymeric toughener chosen from polybutadiene, butadiene-styrene copolymers, butadiene-acrylonitrile, ethylene-propylene rubbers, polyisobutene, polypropylene, polyethylene, ethylene-propylene-nonconjugated diene terpolymers (EPDM), polybutylacrylate and the other elastomeric acrylic copolymers, ethylene-acrylic acid copolymers, and derivatives of said polymers and copolymers obtained by grafting thereon blocks deriving from the polymerization of acrylic or methacrylic esters of saturated aliphatic alcohols, vinyl acetate, acrylonitrile, styrene and substituted styrenes.

22. A thermoplastic block copolymer comprising at least one polycarbonate block and at least one polyester block, and consisting of repetitive carbonate and ester structural units of the following respective formulas: 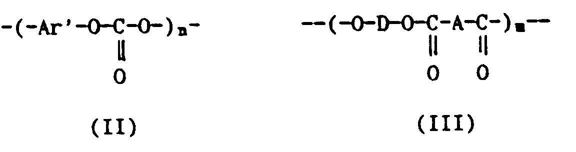 in which:
Ar' is a divalent aromatic radical deriving from a compound with two phenolic hydroxyl groups, and preferably having the same chemical structure as the radical Ar of the preceding formula (I), D and A respectively represent a divalent organic radical deriving from a diol and a divalent organic radical deriving from an aromatic dicarboxylic acid, and
n and m are independently two positive whole numbers between 5 and 250, and preferably between 5 and 100;
said block copolymer c) being prepared by mixing together in the molten state an aromatic polycarbonate and an aromatic polyester which consist of said repetitive units of formulas (II) and (III), said polyester being obtained by polycondensing a mixture comprising a diol and a dicarboxylic acid or a volatile alcohol ester thereof, in the presence of a catalyst consisting of a compound of a metal chosen from lanthanum and any other metal of the lanthanide group of the periodic table of elements.

23. A block copolymer as claimed in claim 22, wherein n and m are between 10 and 50.

24. A block copolymer as claimed in claim 22, consisting essentially of polycarbonate blocks and polyester blocks having independently an average molecular weight of between 1000 and 10,000.

25. A block copolymer as claimed in any one of claims 22 to 24, wherein the aromatic polyester used for its preparation is obtained by polycondensation in the presence of a catalyst consisting of a salt or saline complex of a lanthanide group metal having one of the following formulas (VIII), (IX) or (X):
MXₚL_{q} (VIII) MYₚL_{q} (IX) BᵢMLⱼ (X)
in which:
M is a metal of the lanthanide group and is preferably lanthanum, cerium, samarium or europium,
X is a monovalent inorganic counter-ion,
each L is independently a neutral ligand,
each Y represents independently a monodentate organic anion, B is a bidentate anionic ligand,
p and i are the oxidation states of the metal M, and can assume the value 2 or 3 with the condition that p+q is a maximum of 8 and preferably a whole number between 2 and 6, and that 2i + j is a whole number between 4 and 8 and preferably between 6 and 8.

26. A block copolymer as claimed in claim 25, wherein the salt or saline complex of the lanthanide group metal is chosen from the compounds Eu(acetylacetonate)₃dipyridyl, Eu(2-formylphenolate)₃, Sm(acetylacetonate)₃dipyridyl, Sm(2-formylphenolate)₃ and samarium triacetate hexahydrate.

27. A block copolymer as claimed in any one of claims 22 to 26, wherein the weight ratio of polycarbonate blocks to polyester blocks is between 10/90 and 90/10, and preferably between 30/70 and 70/30.

28. A block copolymer as claimed in any one of claims 22 to 27, consisting essentially of bisphenol A-based polycarbonate blocks and PET blocks in a weight ratio of between 60/40 and 40/60.

29. A process for preparing the thermoplastic composition in accordance with any one of claims 1 to 21, comprising mixing together the three components a), b) and c) in the molten state at a temperature of between 200 and 300°C for a time of between 1 and 10 minutes, and preferably between 1 and 5 minutes.

30. A process for preparing the block copolymer in accordance with any one of claims 22 to 26, comprising mixing together polycarbonate and polyester in the molten state at a temperature of between 240 and 280°C for a time of between 1 and 120 minutes, and preferably between 3 and 30 minutes.

31. Formed articles characterised by containing one of the compositions in accordance with any one of claims 1 to 21.

32. Formed articles characterised by containing a block copolymer in accordance with any one of claims 22 to 28.
